# EUROPEAN PATENT SPECIFICATION

(11) **EP 2 743 502 B1**
(45) Date of publication and mention of the grant of the patent: **20.04.2016**
(21) Application number: 12801794.4
(22) Date of filing: 27.02.2012
(51) Int. Cl.: F03D 9/28, F03D 80/70

(54) **RENEWABLE ENERGY TYPE ELECTRIC POWER GENERATION DEVICE**
VORRICHTUNG ZUR STROMERZEUGUNG MITHILFE ERNEUERBARER ENERGIE
DISPOSITIF DE PRODUCTION D'ÉNERGIE ÉLECTRIQUE DU TYPE À ÉNERGIE RENOUVELABLE

(30) Priority: 10.08.2011 WO PCT/JP2011/068283; 10.08.2011 WO PCT/JP2011/068284; 30.08.2011 WO PCT/JP2011/004842
(43) Date of publication of application: 18.06.2014
(73) Proprietor: Mitsubishi Heavy Industries, Ltd., Tokyo 108-8215 (JP)
(72) Inventor: AKASHI, Yu, Tokyo 108-8215 (JP); MATSUO, Takeshi, Tokyo 108-8215 (JP); SATO, Shinsuke, Tokyo 108-8215 (JP); KAMEDA, Takuro, Tokyo 108-8215 (JP); BALDINI, Francesco, London Greater London W1K6WL (GB)
(74) Representative: Intès, Didier Gérard André
(86) International application number: PCT/JP2012/054770
(87) International publication number: WO 2013/021670

(56) References cited:
- JP-A- 58 047 181
- JP-A- 2003 343 417
- JP-A- 2005 248 738
- JP-A- 2009 091 929
- JP-A- 2009 138 555
- JP-A- 2009 185 641
- US-A1- 2009 140 522
- US-A1- 2010 032 959
- US-A1- 2010 061 853
- "EENVOUDIGE INSTALLERING EN VEEL ENERGETISCHE VARIANTED MOGELIJK HYDRAULISCHE WINDTURBINE", PT WERKTUIGBOUW, STAM TIJDSCHRIFTEN B.V. RIJSWIJK, NL, vol. 41, no. 2, 1 February 1986 (1986-02-01), pages 68-70, XP002033200,

## Description

### [Technical Field]

The present invention relates to a power generating apparatus of renewable energy type which transmits rotational energy of a rotor obtained from a renewable energy source to a generator via a hydraulic transmission formed by a combination of a hydraulic pump and a hydraulic motor. The power generating apparatus of renewable energy type is a generator utilizing renewable energy such as wind, tidal current, ocean current and river current and, for instance, includes a wind turbine generator, a tidal generator, an ocean current generator, a river current generator or the like.

### BACKGROUND ART

In recent years, from a perspective of preserving the environment, it is becoming popular to use a power generating apparatus of renewable energy type such as a wind turbine generator utilizing wind power and a power generating apparatus utilizing tidal current, ocean current or river current. In the power generating apparatus of renewable energy type, the kinetic energy of the wind, tidal current, river current or the like is converted to the rotational energy of the rotor and the rotational energy of the rotor is enhanced and inputted to the generator so as to generate power.

In this type of power generating apparatus of renewable energy type, conventionally a step-up gear is often used as a drive train. However, with increasing size of the power generating apparatus of renewable energy type, a power generating apparatus of renewable energy type using a hydraulic transmission is becoming popular in the light of its weight and cost.

For instance, disclosed in Patent Literature 1 is a wind turbine generator using a hydraulic transmission formed by combination of a hydraulic pump driven by rotation of a rotor and a hydraulic motor connected to a generator. In the hydraulic transmission of this wind turbine generator, the hydraulic pump and the hydraulic motor are fluidically connected via a high-pressure oil line and a low-pressure oil line. Operating oil is pressurized by the hydraulic pump to produce high pressure operating oil and the high pressure operating oil is supplied to the hydraulic motor via the high-pressure oil line. Then, the pressure of the operating oil is converted by the hydraulic motor into a driving force of the generator. The low pressure operating oil discharged from the hydraulic motor is returned to the hydraulic pump via the low-pressure oil line. The hydraulic pump is formed by plural sets of a piston and a cylinder, and a cam for causing the piston to slide in the piston periodically.

Although not equipped with a hydraulic transmission, a wind turbine generator disclosed in Patent Literature 2 is equipped with a cooling system for cooling a converter, a transformer, and control devices. This cooling system includes a plurality of heat exchangers attached to an outer periphery of the tower. In the heat exchangers, a cooling medium having cooled the converter, the transformer and the control devices is cooled by heat exchange with atmosphere.

Further, disclosed in Patent Literature 3 is a cooling unit for a wind turbine generator. The cooling unit is configured to cool a plurality of devices such as a converter, a transformer, a bearing housing, and a generator. In the cooling unit, cooling water having cooled the devices is then cooled by a heat exchanger attached to an outer wall of a tower or a nacelle.

### [Citation List]

### [Patent Literature]

[PTL 1] US 2010/0032959 A
[PTL 2] EP 1798414 A
[PTL 3] EP 2007184 A

### SUMMARY

### [Technical Problem]

In a power generating apparatus of renewable energy type equipped with a hydraulic transmission as in the case of the wind turbine generator disclosed in Patent Literature 1, a plurality of slide members that slide against each other exist, such as a rotations shaft and a bearing for a hydraulic pump, an output shaft of a hydraulic motor and its bearing, and a piston of the hydraulic pump and a cam. To prevent frictional wear of the slide members, normally lubricating oil is supplied to the slide members. However, the hydraulic transmission is already equipped with a high-pressure oil line and a low-pressure oil line for circulating the operating oil and by additionally providing the mechanism solely for supplying the lubricating oil, the piping structure becomes complex. This also requires additionally providing a tank for storing the lubricating oil, a pump and so on, resulting in increasing the size of the apparatus. In view of this, it is possible to branch a flow of the operating oil and use the branched flow as the lubricating oil. In such case, there is still a difficulty in using a simple structure as required viscosity of the operating oil is different from that of the lubricating oil. More specifically, the operating oil is for transmitting the pressure and preferably has the viscosity to lower energy loss. In contrast, the lubricating oil is for reducing friction between the slide members and preferably has higher viscosity than the operating oil. Therefore it is difficult to have full effect of each of the operating oil and the lubricating, simply by branching the flow of the operating oil and using the branched flow as the lubricating oil.

In view of the above issues, it is an object of the present invention to provide a power generating apparatus of renewable energy type which is a simple oil supply mechanism and in which the operating oil and the lubricating oil each affect appropriately.

### [Solution to Problem]

The present invention provides a power generating apparatus of renewable energy type for generating power from renewable energy. The apparatus comprises:
a blade;
a hub supporting the blade;
a rotation shaft configured to be rotated by the renewable energy inputted via the blade;
a nacelle housing the rotation shaft;
a hydraulic pump configured to be driven by the rotation shaft to pressurize operating oil in a working chamber and discharge the pressurized operating oil;
a hydraulic motor configured to be driven by the operating oil discharged from the hydraulic pump;
a generator connected to the hydraulic motor;
an oil line for returning the operating oil from the hydraulic motor to the working chamber of the hydraulic pump;
an oil line cooler provided in the oil line for cooling the operating oil flowing in the oil line by heat exchange with a coolant;
a coolant line for supplying the coolant to the oil line cooler;
a branch line branching from the oil line for introducing the operating oil to a lubrication object of at least one of the hydraulic pump or the hydraulic motor; and
a branch line cooler provided in the branch line for cooling the operating oil flowing in the branch line by heat exchange with a coolant,
wherein two flows of the operating oil cooled by the oil line cooler and the branch line cooler to different temperatures are supplied to the working chamber and the lubrication object via the oil line and the branch line, respectively.

According to the above power generating apparatus of renewable energy type, the operating oil flowing in oil line is branched into two flows and a branched flow of the operating oil is supplied to the lubrication object via the branch line. Thus, a separate line for lubricating oil is not needed and the piping structure can be simplified. Further, by cooling the operating oil and the lubricating oil to different temperatures by means of the oil line cooler provided on the oil line and the branch line cooler provided on the branch line, each of the operating oil and the lubricating oil can exert appropriate effects.

In the above power generating apparatus of renewable energy type,
the branch line cooler may be configured to cool the operating oil flowing in the branch line to a temperature not higher than a temperature of the operating oil cooled by the oil line cooler.

In the case where pressure of the operating oil is transmitted between the hydraulic pump and the hydraulic motor, the operating oil preferably has such a temperature as to achieve viscosity that causes less energy loss (relatively high temperature). In contrast, in the case where the operating oil is used as lubricating oil, the operating oil preferably has such a temperature as to achieve viscosity capable of reducing abrasion during sliding of the lubrication object (relatively low temperature). The operating oil flowing in the branch line is cooled to or below the temperature of the operating oil cooled in the oil line cooler by the branch line cooler so as to supply the operating oil having viscosity appropriate as the lubricating oil.

The above power generating apparatus of renewable energy type may further comprises:
a bypass line branching from at least one of the oil line or the coolant line and merging into the at least one of the oil line or the coolant line so as to bypass the oil line cooler; and
a flow regulating valve provided in the at least one of the oil line or the coolant line for bypassing the oil line cooler between a branching point and a merging point of the bypass line, the flow regulating valve regulating a flow rate of at least one of the operating oil or the coolant that enters the oil line cooler.

As described above, the bypass line is provided so that at least one of the oil line or the coolant line bypasses the oil line cooler and the flow of the fluid entering the bypass line is regulated by the flow regulating valve. Thus, it is possible to adjust a heat exchange rate in the oil line cooler between the operating oil and the coolant. As a result, the temperature of the operating oil cooled in the oil line cooler can be freely adjusted and the operating oil can be maintained at an appropriate temperature even when the temperature in a peripheral area, an amount of heat generated from the generator, or the like changes. Further, by restricting in advance an amount of the operating oil bypassing the oil line cooler, it is possible to prevent over cooling. Furthermore, the flow regulating valve can be completely closed. In this case, the flow of the operating oil entering the oil line cooler becomes zero and cooling is not performed in the oil line cooler.

The above power generating apparatus of renewable energy type may further comprise:
a heat exchanger provided in the coolant line for cooling the coolant by heat exchange with a surrounding fluid that is present around the power generating apparatus of renewable energy type,
wherein a heat exchange rate between the coolant and the surrounding fluid in the heat exchanger is adjustable by adjusting at least one of a flow rate of the coolant or a flow rate of the surrounding fluid.

As described above, the heat exchanger is provided in the coolant line to cool the coolant by heat exchange with the surrounding fluid and the heat exchange rate between the coolant and the surrounding fluid in the heat exchanger is adjustable by adjusting at least one of a flow rate of the coolant or a flow rate of the surrounding fluid. As a result, the coolant can be cooled to an appropriate temperature.

Further, a duct attached to a wall surface of the nacelle and having the heat exchanger inside may be provided,
the surrounding fluid may be ambient air, and
the heat exchanger may be configured to cool the coolant by use of the ambient air and to cool the operating oil and a heat generation source in the nacelle by use of the coolant.

As described above, in cooling the coolant in the heat exchanger and cooling the heat generation source in the nacelle, the ambient air drawn in via the duct attached to the wall surface of the nacelle is used. Therefore, the intake port can be arranged near the cooling object and thus the duct can be reduced in length. As a result, less power is used for drawing in the ambient air.

Further, a duct attached to a wall surface of the nacelle and having the heat exchanger inside may be provided, and
the duct may comprise an intake port for introducing ambient air as the surrounding fluid into the duct and an exhaust port for exhausting the ambient air, the intake port being provided on a side wall of the nacelle along the rotation shaft, the exhaust port being provided on a wall surface of the nacelle on a rear end side that is farther from the hub.

By providing the duct on the side wall of the nacelle, a top surface of the nacelle can be utilized for other purposes such as a heliport.

Furthermore, a vortex generator may be provided on the wall surface of the nacelle near the intake port for generating a vortex in the ambient air.

It is known that a boundary layer is formed in the ambient air flowing on an object surface such as the wall surface of the nacelle. Herein, the boundary layer is a region generated near an object placed in the flow and where the flow speed is slower than a main stream. The pressure increases where the wall surface of the nacelle protrudes on a downstream in the flow, thereby causing boundary layer separation. The boundary layer separation reduces the flow of the ambient air introduced to the intake port, hence reducing the heat exchange rate. In view of this, the vortex generator for generating a vortex in the ambient air is provided on the wall surface of the nacelle near the intake port. As a result, it is possible to prevent boundary layer separation on the wall surface of the nacelle and also to secure enough flow rate of the ambient into the intake port.

Moreover, the duct may further comprise a flange projecting from an outer wall surface of the intake port on the rear end side.

The air flowing outside the outer wall surface of the nacelle flows faster in an area around the flange where the flow passage area decreases, thereby raising its dynamic pressure and correspondingly lowering its static pressure. Further, a vortex is generated in an area downstream of the flange. This also contributes to pressure decline in the area. Therefore, the low pressure in the area downstream of the flange draws more ambient air into the duct from the intake port. As a result, the amount of heat transferring from the coolant in the heat exchanger to the ambient air increases, thereby effectively cooling the heat generation source.

Further, the nacelle may have a curved portion on the side wall on the rear end side, the curved portion curving toward a center line of the nacelle with distance from the hub, and
the duct may be formed such that a cross-sectional area increases from an intake port side toward an exhaust port side at least in a region where the curved portion is formed.

As the duct is formed such that a cross-sectional area increases from the intake port side toward the exhaust port side, more ambient air can be drawn into the duct by diffuser effect of the duct. Therefore, the amount of heat taken from the coolant by the ambient air in the heat exchanger increases and thus the heat generation source can be cooled effectively.

Furthermore, a plurality of the heat exchangers may be arranged in the duct,
the duct may further comprise a fan for increasing an amount of the ambient air introduced into the duct, and
an amount of heat taken from the coolant by the ambient air in the heat exchanger may be adjustable by changing a rotational speed of the fan.

Alternatively, a plurality of the heat exchangers may be arranged in the duct,
the duct may further comprise a plurality of fans for increasing an amount of the ambient air introduced into the duct, and
an amount of heat taken from the coolant by the ambient air in the heat exchanger may be adjustable by changing the number of operating fans among the plurality of the fans.

As described above, by changing the rotation speed of the fan or the number of operating fans, the heat exchange rate in the heat exchanger is adjusted. Therefore, the coolant which exited the heat exchanger and is used again for cooling the heat generation source can be maintained in an appropriate temperature range so as to cool the heat generation source appropriately.

Especially in the wind turbine generator using the hydraulic transmission, in the case where the operating oil of the hydraulic transmission is cooled by the coolant, if the temperature of the coolant is too low, the operating oil is overcooled and the viscosity of the operation oil exceeds an upper limit. With the viscosity exceeding the upper limit, the loss in the hydraulic transmission becomes high and thus the power generation efficiency declines significantly. By adjusting the heat exchange rate by any of the above-described methods so as to maintain the coolant in the appropriate pressure range, it is possible to suppress the loss in the hydraulic transmission caused by viscosity increase of the operating oil.

The above power generating apparatus of renewable energy type may further comprise:
a sealed chamber housing an electrical device arranged in an interior space of the nacelle, the sealed chamber being sealed off from the interior space,
wherein the sealed chamber is configured to be cooled by the coolant cooled by the heat exchanger.
By housing the electrical device in the sealed chamber, the electric device can be isolated from the ambient air which possibly contains corrosive substance and thus the electric devices are protected against corrosion. As the electric devices are one source of heat generation, by housing the electric devices in the sealed chamber, heat might get trapped in the sealed chamber. However, by cooling the air inside the sealed chamber, the electric devices are protected against overheating.

The above power generating apparatus of renewable energy type may further comprise:
a generator cooler for cooling the generator,
wherein the generator cooler is configured to cool the generator by ambient air introduced from an exterior of the nacelle through a flexible piping.

As the generator is one source of heat generation, components of the generator and the surrounding structures thermally expand. Further, the generator includes a rotary part, which causes vibration. The thermal expansion and vibration generates relative displacement with respect to the nacelle housing the generator. Therefore, by connecting the generator cooling system with the intake port for drawing in the ambient air from the exterior of the nacelle or with the exhaust port by means of the flexible piping, the relative displacement can be absorbed by the deformable flexible piping. As a result, the load on the piping is reduced. Moreover, the flexible piping has flexibility and is feely bendable to some extent.

The above power generating apparatus of renewable energy type may further comprise:
a transformer room provided in an interior or a peripheral area of a tower supporting the nacelle for housing a transformer;
another cooler for cooling air in the transformer room by heat exchange with another coolant;
another coolant line provided separately from the coolant line, the another coolant flowing in the another coolant line; and
another heat exchanger connected to the another coolant line for cooling the another coolant by heat exchange with surrounding fluid around the power generating apparatus of renewable energy type.

In the case where the transformer room is provided in the interior of the tower or in the peripheral area of the tower, it requires a long piping from the nacelle to the tower to supply the coolant for cooling the hydraulic transmission in the nacelle and also requires a mechanism to correspond with yaw turning of the nacelle. Therefore, by supplying coolant from another coolant line provided for the transformer room, separately from the coolant line on the nacelle side, the piping structure can be simplified.

The above power generating apparatus of renewable energy type may further comprise:
a ventilation system for cooling a space inside at least one of a tower supporting the nacelle, the nacelle or the hub by use of ambient air,
wherein the ventilation system comprises an intake port for introducing the ambient using a fan, a filter provided in the intake port for blocking a corrosive substance contained in the ambient air, and an exhaust port for exhausting air from the space.

By providing a filter in the intake port for introducing the ambient air into the space of at least one of the nacelle or the hub so as to block a corrosive substance contained in the ambient air. As a result, the devices arranged in the space are protected against corrosion.

In this case, the ventilation system may further comprise a shutter for opening and closing the intake port, and
wherein the shutter is configured to open when a temperature in the space is above a setting temperature and to close when the temperature in the space is below the setting temperature.

The power generating apparatus is often installed at places where a peripheral temperature changes significantly, such as a high place and offshore. In such case, the temperature in the tower, the nacelle or the hub changes and such significant temperature change can affect operation of the devices. Therefore the shutter for opening and closing the intake port is provided. By opening the shutter when the temperature in the space exceeds the setting temperature and closing the shutter when the temperature in the space is below the setting temperature, the temperature change in the space is minimized, thereby achieving smooth operation of the devices.

Alternatively, the ventilation system may be provided in the hub, and the intake port may communicate with a hole formed in the blade so as to exhaust the ambient air from the hole.

During operation of the power generating apparatus of renewable energy type, rotation of the blade generates negative pressure in a peripheral area, whereas the interior space of the hub has a positive pressure. This causes a pressure difference between a periphery of the blade and the interior space of the hub. In view of this, by communicating the interior space of the hub and the periphery of the blade via the hole formed in the blade, the pressure difference generates an air flow from the interior space of the hub through the blade to the outside. Therefore, a fan for ventilating the interior space of the hub is not needed or reduced in size and thus the power for ventilation can be reduced.

Alternatively, the ventilation system may be provided in the hub, and the intake port may be configured such that an opening formed in the hub communicates with one of a space between the hub and a spinner covering the hub, or an interior space of the nacelle through a hollow space of the rotation shaft so as to exhaust the ambient air introduced from the intake port to the at least one of the space between the hub and the spinner or the interior space of the nacelle. As a result, the heated air in the interior space of the hub can be exhausted to the outside. Further, the intake port may communicate with both the hub and the spinner and the interior space of the nacelle.

### [Advantageous Effects of Invention]

According to the present invention, by providing the branch line for branching the operating oil flowing in the oil line and supplying the branched portion of the operating oil to the lubrication object as lubricating oil, it is no longer needed to independently provide a line for supplying lubricating oil and the piping structure is simplified. Further, by cooling the operating oil and the lubricating oil to different temperatures by means of the oil line cooler provided on the oil line and the branch line cooler provided on the branch line. As a result, each of the operating oil and the lubricating oil can exert appropriate effects.

### [Brief Description of Drawings]

[FIG.1]

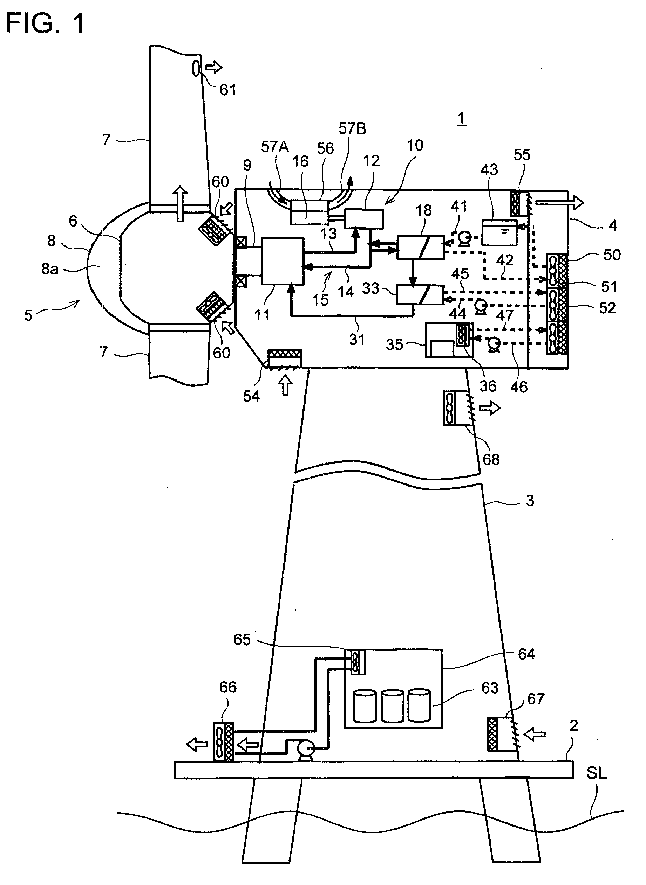

   FIG.1 is a schematic view of an overall structure of a wind turbine generator according to embodiments of the present invention.
[FIG.2]

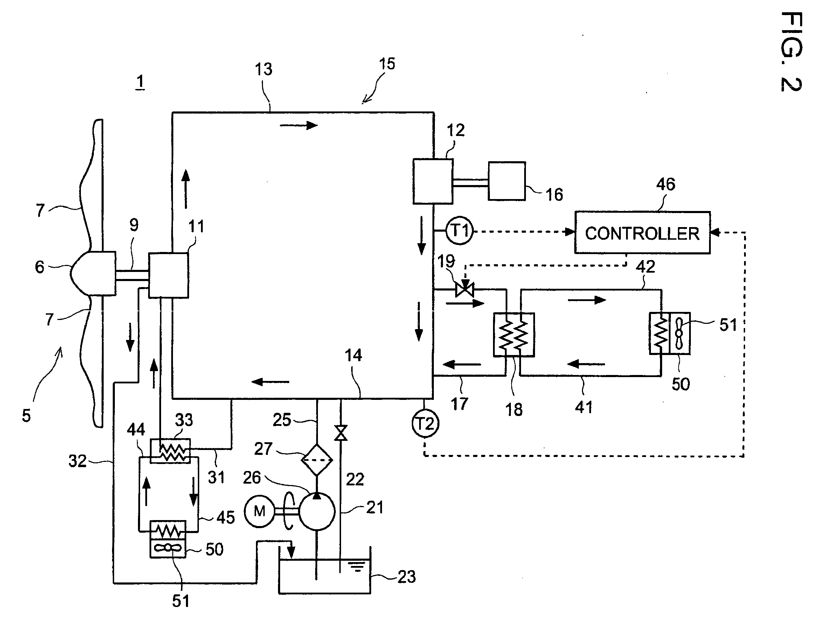

   FIG.2 is an illustration of a configuration of an oil line, a branch line and a coolant line.
[FIG.3]

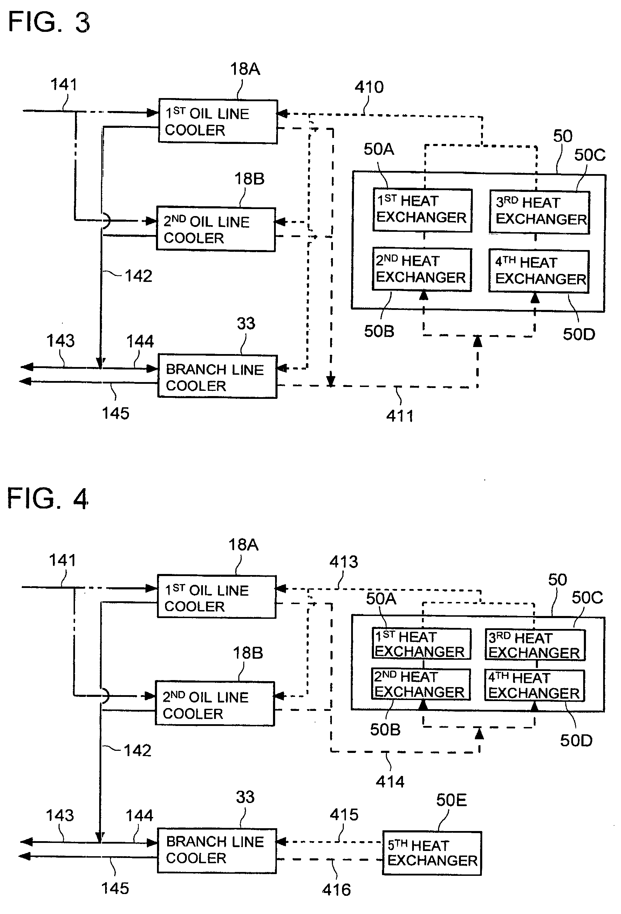

   FIG.3 is an illustration of a configuration of the oil line and the coolant line.
[FIG.4]
   FIG.4 is an illustration of another configuration of the oil line and the coolant line.
[FIG.5]

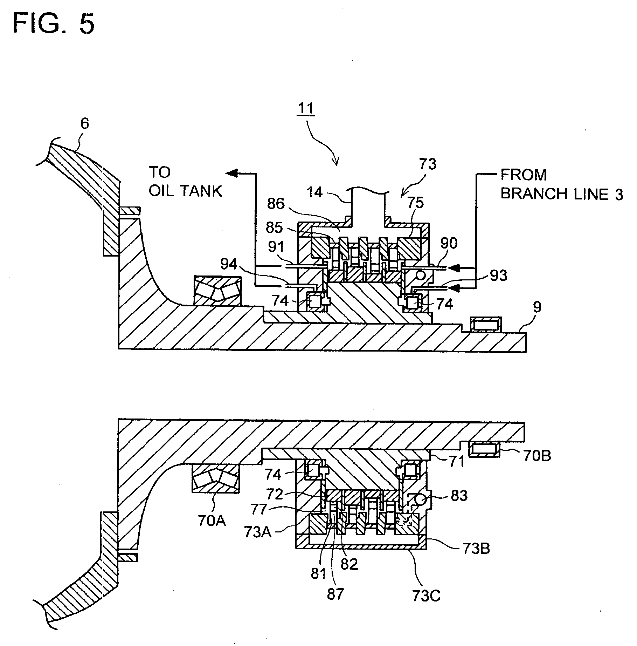

   FIG.5 is a cross-sectional illustration of a specific structure of the hydraulic pump.
[FIG.6A]

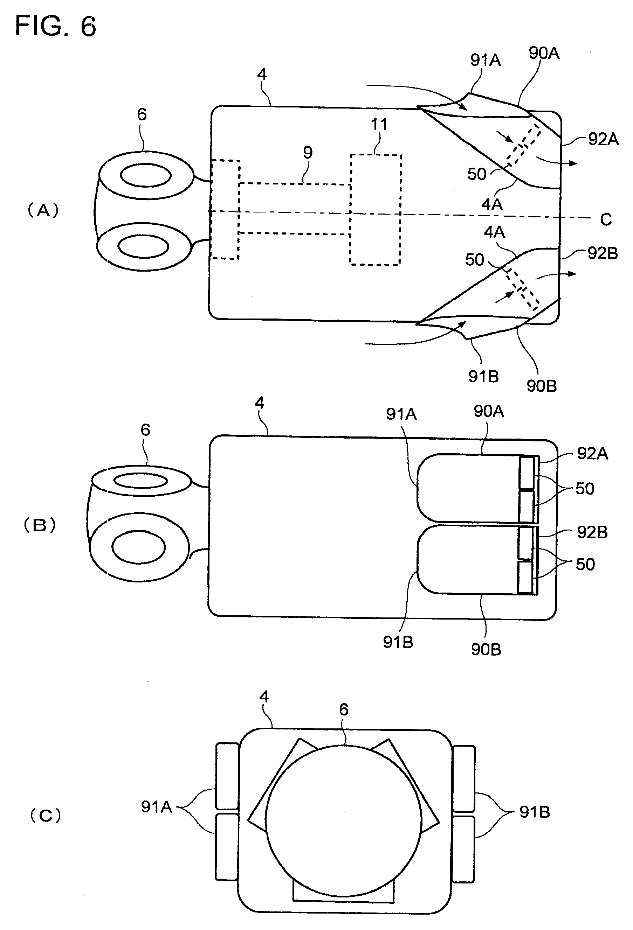

   FIG.6A is a plane view of a nacelle having ducts.
[FIG.6B]
   FIG.6B is a side view of the nacelle having the ducts.
[FIG.6]
   FIG.6C is a front view of the nacelle having the ducts taken from a hub side.
[FIG.7]

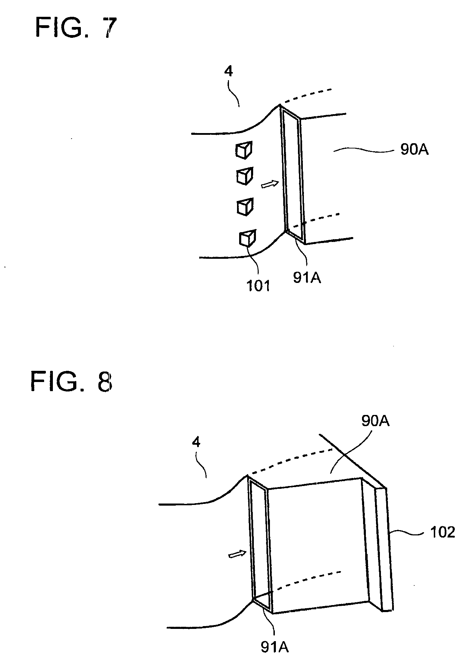

   FIG.7 is an oblique perspective view of a structure example of a vortex generator.
[FIG.8]
   FIG.8 is an oblique illustration of a structure example of a flange.
[FIG.9]

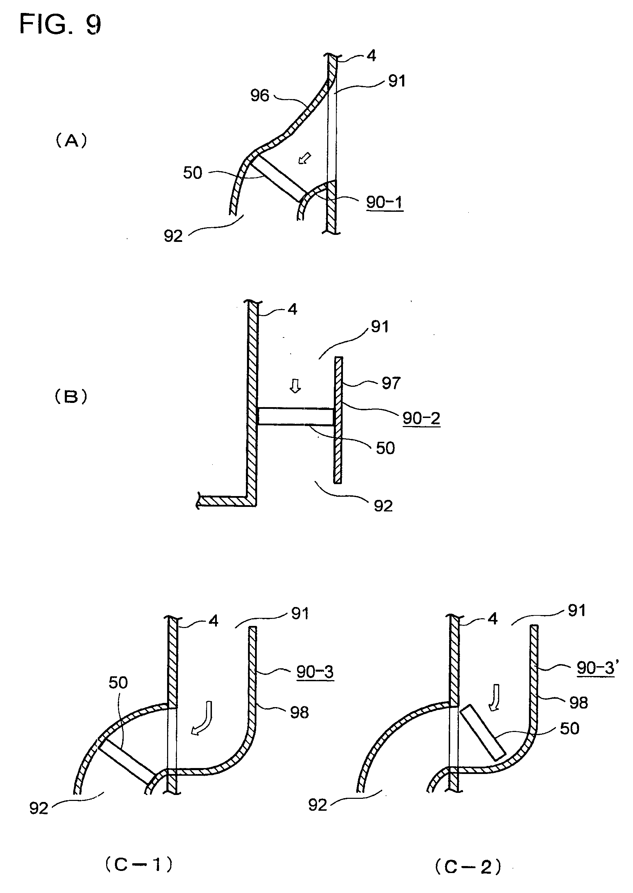

   FIG.9 is a cross-sectional view of a modified example of the duct.

### [Description of Embodiments]

Embodiments of the present invention will now be described in detail with reference to the accompanying drawings. It is intended, however, that unless particularly specified in these embodiments, dimensions, materials, shape, its relative positions and the like shall be interpreted as illustrative only and not limitative of the scope of the present invention.

In reference to FIG.1 and FIG.2, a wind turbine generator according to embodiments of the present invention is described. Herein, FIG.1 is a schematic view of an overall structure of a wind turbine generator according to embodiments of the present invention. FIG.2 is an illustration of a configuration of an oil line, a branch line and a coolant line.

As shown in FIG.1, a wind turbine generator 1 mainly includes a tower 3 installed on a base 2, a nacelle 4 supported by the tower 3, and a rotor 5 rotated by wind energy.

FIG.1 shows an offshore wind turbine generator installed on the sea level SL as the wind turbine generator 1. However, this is not limitative and the wind turbine generator 1 may be installed onshore.

The rotor 5 is formed by at least one blade 7 (e.g. three blades), and a hub 6 for supporting the blade 7. The hub 6 is coupled to a rotation shaft 9 housed in the nacelle 4. As a result, the rotor 5 rotates upon receiving wind on the blade 7, and then rotation of the rotor 5 causes the rotation shaft 9 coupled to the hub 6 to rotate. The hub 6 is covered by a spinner 8.

The hydraulic transmission 10 and the generator 16 are housed in the nacelle 4.

As shown in FIG.2, the hydraulic transmission 10 is provided with a hydraulic pump 11 connected to the rotation shaft 9, a hydraulic motor 12 connected to the generator 16, and an oil line 15 arranged between the hydraulic pump 11 and the hydraulic motor 12. The oil line 15 is formed by a high pressure oil line 13 connecting an exhaust side of the hydraulic pump 11 to an intake side of the hydraulic motor 12, and a low pressure oil line 14 connecting an intake side of the hydraulic pump 11 to an exhaust side of the hydraulic motor 12.

The hydraulic pump 11 is driven by the rotation shaft 9 to produce high pressure operating oil. This high pressure operating oil is supplied to the hydraulic motor 12 via the high pressure oil line 13 to drive the hydraulic motor 12 using the high pressure operating oil. Meanwhile, the generator 16 connected to the hydraulic motor 12 is driven to produce electric power. The operating oil discharged from the hydraulic motor 12 is supplied to the hydraulic pump 11 via the low pressure oil line 14. The operating oil supplied to the hydraulic pump 11 is pressurized again in the hydraulic pump 11 and then supplied to the hydraulic motor 12. The structure of the hydraulic pump 11 is described later in details.

In the low pressure oil line 14, an oil replenishing mechanism is provided for adjusting a circulation amount of the operating oil. The oil replenishing mechanism includes a return line 21, a low pressure relief valve 22, an oil tank 23, a replenishing line 25, a boost pump 26, and an oil filter 27.

The replenishing line 25 connects the oil tank 23 to the low pressure oil line 14.

The oil tank 23 reserves the operating oil for replenishment. This oil tank 23 may be open to the atmosphere.

The boost pump 26 is provided in the replenishing line 25 to replenish the operating oil to the low pressure oil line 14 from the oil tank 23. In this case, the operating oil supplied to the low pressure oil line 14 passes through the oil filter 27 provided in the replenishing line 25 to remove impurities.

As a result, even when the operating oil leaks inside the hydraulic transmission 10, the low pressure oil line 14 is replenished with the operating oil from the oil tank 23 using the boost pump 26. Thus, the amount of the operating oil circulating in the hydraulic transmission 10 can be maintained.

The return line 21 is arranged between the oil tank 23 and the low pressure oil line 14. In the return line 21, the low pressure relief valve 22 is provided so as to maintain the pressure in the low pressure oil line 14 near a setting pressure.

As a result, in such a case that the operating oil is supplied to the low pressure oil line 14 by the boost pump 26, once the pressure in the low pressure oil line 14 reaches the setting pressure of the low pressure relief valve 22, the low pressure relief valve 22 automatically opens to release the operating oil to the oil tank 23 via the return line 21. Thus, the amount of the operating oil circulating in the hydraulic transmission 10 can be appropriately maintained.

An oil cooler 18 for cooling the operating oil is connected to the low pressure oil line 14. The oil cooler 18 cools the operating oil by heat exchange with cooling medium (hereinafter described as coolant). As one example, the oil line cooler 18 is provided in a bypass line 17 in FIG.2. The bypass line 17 is a flow path of the operating oil that branches from the low pressure oil line 14 and merges again to the low pressure oil line 14. The oil line cooler 18 may be provided directly on the low pressure oil line 14.

To the oil line cooler 18, coolant is introduced via a coolant line 41. The coolant after performing heat exchange with the operating oil is discharged via a coolant line 42. The coolant line 42 is connected to a heat exchanger 50. The coolant introduced to the heat exchanger 50 through the coolant line 42 is cooled in the heat exchanger 50 equipped with a fan 51 by heat exchange with ambient air. The cooled coolant is again introduced to the oil line cooler 18 via the coolant line 41.

More specifically, the coolant lines 41, 42 are flow paths configured to circulate the coolant cooling a heat generation source of the wind turbine generator 1 (the hydraulic transmission in FIG.2), and are configured as a coolant circuit of a closed loop.

As the coolant that circulates in the coolant lines 41, 42, coolant constituted of any liquid or gas may be used. Water may be used as the coolant. Moreover, water added with antifreeze liquid may be used as the coolant as well.

The heat exchanger 50 includes a heat exchanger tube group formed by a plurality of heat exchanger tubes. This heat exchanger 50 is configured to cool the coolant flowing in the heat exchanger tubes by heat exchange with the surrounding fluid flowing around the heat exchanger tubes. The surrounding fluid is fluid that is present around the wind turbine generator 1, such as air and sea water. The coolant passes through the oil line cooler 18 and then flows in the heat exchanger tubes. The coolant is then cooled by the surrounding fluid flowing around the heat exchanger tubes. In such case, air may be used as the surrounding fluid. Normally the wind turbine generator 1 is installed at a place where wind speed above a certain wind speed can be obtained. Thus, it is easier in the wind turbine generator 1 to draw the surrounding fluid into the heat exchanger 50 by using air as the surrounding fluid for cooling the coolant. In the offshore wind turbine generator, sea water may be used as the surrounding fluid. As there is plenty of sea water present around the offshore wind turbine generator, sufficient amount of sea water can be secured as the surrounding fluid for cooling the coolant.

Herein, an amount of heat exchanged between the coolant and the surrounding fluid in the heat exchanger 50 may be adjusted using at least one of a flow of the coolant or the flow of the surrounding fluid.

More specifically, in the case where the ambient air is drawn into the heat exchanger 50 by the fan 51 and the operating oil is cooled by heat exchange with the ambient air, a temperature of the operating oil in the oil line 15 or a temperature of the ambient air is inputted to a controller 46 and based on the inputted temperature, a rotation speed of the fan 51 is controlled so as to adjust the flow of the ambient air introduced to the heat exchanger 50.

By changing the flow of the coolant or the flow of the surrounding fluid as described above, a potential heat amount of the coolant can be freely adjusted. As a result, the potential heat amount of the coolant, i.e. cooling capacity of the coolant itself can be adjusted, thereby significantly improving a cooling function of the operating oil. In the wind turbine generator 1, heat loss of the oil line cooler 18 changes due to the load of the generator in particular. Thus, with the above structure, it is possible to cool the operating oil in accordance with the load of the generator 16. FIG.2 shows only one heat exchanger 50. However, the number of the heat exchangers 50 is not limited to this and more than one heat exchanger 50 may be provided in accordance with an expected amount of heat generated from the heat generation source of the wind turbine generator 1. In this case, the heat exchangers 50 may be connected in parallel or in series to the coolant lines 41, 42.

Further, a flow regulating valve 19 may be provided on the bypass line 17. With use of the flow regulating valve 19, the flow of the operating oil entering the oil line cooler 18 can be regulated.

By regulating the flow of the operating oil entering the bypass line 17 with use of the flow regulating valve 19 as described above, the heat exchange rate between the operating oil and the coolant in the oil line cooler 18 can be adjusted. As a result, it is possible to maintain the operating oil at an appropriate temperature through cooling of the operating oil. Further, the flow regulating valve 19 may be provided in a branching point where the bypass line 17 branches from the low pressure oil line 14. In this case, a three-way valve may be used.

An opening of the flow regulating valve 19 is controlled by the controller 46. In this case, the temperature of the operating oil at a prescribed position of the oil line 15 is detected by a temperature sensor T1 or T2. To adjust the detected temperature to a preset setting temperature, the opening of the flow regulating valve 19 is adjusted by the controller 46 to regulate the flow of the operating oil entering the oil line cooler 18. Further, the setting temperature may be set based on viscosity of the operating oil. For instance, an upper limit of the setting temperature may be a temperature corresponding to a lower limit of viscosity of the operating oil which is set to suppress a rate of deterioration, a leakage rate, or the like, whereas a lower limit of the setting temperature may be a temperature corresponding to an upper limit of viscosity of the operating oil which is set to suppress energy loss due to viscous resistance in the hydraulic transmission.

In the hydraulic transmission, the appropriate temperature varies depending on a position on the oil line 15. Thus, the setting temperature is set corresponding to a position of the oil line 15. Further, at least one setting temperature is provided. In the case where there is a plurality of setting temperatures, the plurality of setting temperatures corresponds to a plurality of positions on the oil line 15. More specifically, there are setting temperatures respectively corresponding to the temperature sensors T1, T2 provided at different positions on the oil line 15. Further, the positions of the temperature sensors T1, T2 on the oil line 15 are on the low pressure oil line 14, or may be provided on the high pressure oil line 13.

The flow regulating valve 19 can be completely closed. In this case, the flow of the operating oil entering the oil line cooler 18 becomes zero and cooling is not performed in the oil line cooler 18.

In the above structure, the bypass line 17 is provided in the oil line 15. Alternatively, the bypass 17 line may be provided on the coolant line 41, 42 side.

In this case, a bypass line is connected to the coolant lines 41, 42 so that the coolant bypasses the oil line cooler 18. Further, a flow regulating valve may be provided for regulating a flow of the coolant bypassing the oil line cooler 18. With the flow regulating valve, a flow of the coolant entering the oil line cooler 18 can be regulated so as to adjust the heat exchange rate in the oil line cooler.

Moreover, a branch line 31 is connected to the low pressure oil line 14 to separate a portion of the operating oil from the low pressure oil line 14. The branch line 31 extends to a lubrication object and the portion of the operating oil separated from the low pressure oil line 14 is supplied to the lubrication object as lubricating oil. A branch line cooler 33 is provided on the branch line 31. The branch line cooler 33 cools the separated portion of the operating by heat exchange with coolant. Connected to the branch line cooler 33 are a coolant line 44 for cooling the coolant, and a coolant line 45 for exhausting the coolant whose temperature increased by the heat exchange. The coolant line 45 is connected to the heat exchanger 50. The coolant is cooled by the ambient air supplied to the heat exchanger 50 by the fan and then supplied again to the branch line cooler 33 through the coolant line 44.

In this case, the branch line cooler 33 may cool the operating oil flowing in the branch line 31 to not higher than the temperature of the operating oil cooled in the oil line cooler 18. As a result, the operating oil having appropriate viscosity as lubricating oil can be supplied as lubricating oil to the lubrication object. Further, from a perspective of enhancing cooling of the operating oil supplied as the lubricating oil, the branch line 31 is preferably connected to a downstream side of the oil line cooler 18. As shown in FIG.1, a portion of the operating oil having passed through the oil line cooler 18 may be introduced to the branch line 31.

Moreover, the operating oil supplied to the lubricating object from the branch line 31 is used as lubricating oil and then returned to the oil tank 23 through a return line 32.

As shown in FIG.1, a pump for pumping the coolant may be provided on the coolant lines 41, 44. Further, a coolant tank 43 for reserving the coolant may be provided on the coolant line 41. Though not shown in the drawing, a coolant tank may be provided on the coolant line 44 as well.

More than one heat exchanger 50 may be provided for cooling the coolant by heat exchange with the ambient air. The heat exchanger 50 is equipped with the fan 51 for introducing the ambient air into the heat exchanger 50. The heat exchanger 50 may be also equipped with a filter 52 for removing foreign objects such as corrosive substance contained in the ambient air introduced by the fan 51. The configuration of peripheral devices of the heat exchanger 50 is described later in details.

In reference to FIG.3 and FIG.4, examples of the oil line and the coolant line are explained. The values suggested here are mere examples and the embodiments should not be limited to these values. Further, the devices attached to the line, such as a pump and a tank are not shown in the drawing.

In the example shown in FIG.3, the oil line cooler 18 includes a first oil line cooler 18A and a second oil line cooler 18B. The heat exchanger 50 includes a first heat exchanger 50A, a second heat exchanger 50B, a third heat exchanger 50C and a fourth heat exchanger 50D.

Coolant 410 is cooled to approximately 42°C by the heat exchanger 50 formed by the first heat exchanger 50A to the fourth heat exchanger 50D. The cooled coolant 410 is introduced to the first oil line cooler 18A, the second oil line cooler 18B and the branch line cooler 33 that are connected to the heat exchanger 50 in parallel. The coolant 410 is heated to approximately 52°C while cooling the operating oil and becomes coolant 411. The heated coolant 411 is then returned to the heat exchanger 50.

Operating oil 141 of approximately 60°C is introduced to each of the first oil line cooler 18A and the second oil line cooler 18B from the low pressure oil line 14. The operating oil 141 is cooled by the coolant in the first oil line cooler 18A and the second oil line cooler 18B and then discharged as operating oil 142 of approximately 50°C. This operating oil 142 is branched into two flows. One flow of the operating oil, 144 is introduced to the branch line cooler 33 and cooled by the coolant to approximately 45°C and supplied to the lubrication object as operating oil 145 (lubricating oil). Meanwhile, the other flow of the operating oil, 143 is supplied to a working chamber of the hydraulic pump 11 as operating oil.

In this example, the operating oil 143 supplied to the working chamber of the hydraulic pump 11 and the operating oil 145 supplied to the lubrication object have different temperatures. Thus, to vary the temperature of the operating oil between the two flows of the operating oil 143, 145, the operating oil having passed through the oil line cooler 18A, 18B is introduced to the branch line cooler 33. In addition to this, the flow of the coolant supplied to each of the coolers may be adjusted.

In another example shown in FIG.4, the coolant line is separated. More specifically, the coolant 413 cooled in the heat exchanger 50 to approximately 47°C is introduced to the first oil line cooler 18A and the second oil line cooler 18B connected to the heat exchanger 50 in parallel. The coolant 413 is heated to approximately 52°C while cooling the operating oil and becomes coolant 414. The heated coolant 414 is then returned to the heat exchanger 50. In the branch line cooler 33, another coolant line is provided separately from the oil line coolers 18A, 18B. The coolant 415 cooled to approximately 42°C by the ambient air in a heat exchanger 50E is introduced to the branch line cooler 33. The coolant 415 is heated to approximately 44°C through cooling the operating oil and becomes coolant 416. The heated coolant 416 is returned to the heat exchanger 50E. As described above, the temperature of the operating oil supplied to the working chamber of the hydraulic pump 11 is not the same as the temperature of the operating oil supplied to the lubrication object and thus, different coolers may be provided for cooling those two flows of the operating oil.

In reference to FIG.5, the structure of the hydraulic pump 11 is described in details. FIG.5 is a cross-sectional illustration of a specific structure of the hydraulic pump 11.

The hydraulic pump 11 is attached to the rotation shaft 9 via a cam mount 71. The rotation shaft 9 is rotatably supported to the nacelle side via shaft bearings 70A, 70B. In the example shown in FIG.3, the hydraulic pump 11 is arranged between a pair of the shaft bearings 70A, 70B. However, the arrangement of the hydraulic pump 11 is not limited to this and the hydraulic pump 11 may be arranged on a side farther from the hub 6 than the pair of the shaft bearings 70A, 70B.

A pump casing 73 is fixed to an outer periphery of the cam mount 71 via a pump bearing 74. The pump casing 73 is formed by a pair of end plates 73A, 73B and a cylindrical case 73C disposed between the end plates 73A, 73B. The pump casing 73 both covers cylinders 81, pistons 82, a high pressure manifold 83, a low pressure manifold 86, a high pressure valve and a low pressure valve (not shown), and cams 72, and prevents the operating oil from leaking to the exterior. The cam 72 is a ring cam having a wave-like cam lobe profile with projections and depressions arranged alternately around the rotation shaft 9. The cam 72 is housed in a space called a cam housing 77. The cam housing 77 is normally filled with lubricating oil (low pressure oil).

The hydraulic pump 11 may include a plurality of modules each formed by a cylinder block 75 having at least one cylinder 81, a piston 82 provided for each cylinder 81 of the cylinder block 75, the high pressure manifold 83, the low pressure manifold 86, a high pressure valve and a low pressure valve.

A working chamber 87 surrounded by the cylinder 81 and the piston 82 is formed in the cylinder 81.

From a perspective of operating the piston 82 smoothly along the cam curve of the cam 72, the piston 82 may be formed by a piston body slidable in the cylinder 81 and one of a piston roller or a piston shoe which is attached to the piston body and which engages with the cam curve of the cam 72.

The working chamber 87 has volume that is changeable by sliding the piston 82 in the cylinder 81. The working chamber 87 in communication with a high pressure oil channel (not shown) and a low pressure oil channel 85. The high pressure oil channel is opened and closed by a high pressure valve and the low pressure oil channel 85 is opened and closed by a low pressure valve.

Some of the high pressure oil channels communicate with one of high pressure oil collective channels formed in the cylinder block 75. Further, the high pressure oil collective channels communicate with the high pressure manifold 83 formed in the endplate 73B. The high pressure manifold 83 is connected to the high pressure oil line 13 shown in FIG.2. As a result, the high pressure oil discharged from a plurality of working chambers 87 is discharged through the high pressure oil channels, the high pressure oil collective channels, the high pressure manifold 83 to the high pressure oil line 13 in this order.

In contrast, the low pressure oil channels 85 communicates with the low pressure manifold (a ring tank) 86 formed by an outer periphery of the cylinder block and the cylinder case 73 and the low pressure manifold 86 is connected to the low pressure oil line 14. Thus, the low pressure oil introduced from the low pressure oil line 14 is introduced through the low pressure manifold 86 and the low pressure oil channels 85 into a plurality of the working chamber 87 in this order.

In the hydraulic pump 11 having the above structure, when the cam 72 rotates with the rotation shaft 9, the piston 82 moves up and down periodically and repeats a pump stroke where the piston 82 moves from a bottom dead center toward a top dead center and an intake stroke where the piston moves from the top dead center toward the bottom dead center. In the pump stroke, the high pressure valve is opened and the low pressure valve is closed so as to supply the high pressure oil from the working chamber 87 to the high pressure oil line 13. In contrast, in the intake stroke, the high pressure valve is closed and the low pressure valve is opened so as to supply the low pressure oil from the low pressure oil line 14 to the working chamber 87.

In the hydraulic pump 11 having the above structure, the lubrication object of the present embodiment is, for instance, the pump bearing 74 or the cam housing 77. More specifically, lubricating oil supply channels 90, 93 and lubricating oil discharge channels 91, 94 are formed in the end plates 73A, 73B, respectively.

The lubricating oil supply channel 90 is connected to the branch line 31 at one end and connected to the cam housing 77 at the other end. The lubricating oil discharge channel 91 communicates with the cam housing 77 at one end and is connected to the return line 32 and the oil tank 23 at the other end. The lubricating oil (the operating oil) supplied from the branch line 31 is supplied to the cam housing 77 through the lubricating oil supply channel 90. The lubricating oil leaking from the cam housing 77 is returned to the oil tank 23 through the return line 32 from the lubricating oil discharge channel 91.

The lubricating oil supply channel 93 is connected to the branch line 31 at one end and connected to a housing space of the pump bearing 74 at the other end. The lubricating oil discharge channel 94 communicates with the housing space of the pump bearing 74 at one end and is connected to the return line 32 and the oil tank 23 at the other end. The lubricating oil supplied from the branch line 31 is supplied to the housing space of the pump bearing 74 through the lubricating oil supply channel 93. The lubricating oil leaking from the housing space of the pump bearing 74 is returned to the oil tank 23 through the return line 32 from the lubricating oil discharge channel 94. Further, the leaked lubricating oil may be returned to the low pressure oil line 14.

In reference to FIG.6, the heat exchanger 50 and its surrounding structures that are provided in the nacelle 4 are described in details. FIG.6A is a plane view of a nacelle having ducts. FIG.6B is a side view of the nacelle having the ducts. FIG.6C is a front view of the nacelle having the ducts taken from a hub side.

As shown in FIG.6A to FIG.6C, the ducts 90A, 90B are respectively provided on a wall surface of the nacelle 4. The ducts 90A, 90B are provided on a side wall of the nacelle 4. The ducts 90A, 90B are provided with intake ports 91A, 91B for taking in the ambient air and exhaust ports 92A, 92B provided for exhausting the ambient air on a wall surface of the nacelle 4 on a rear end side that is farther from the hub 6. More specifically, the ducts 90A, 90B are provided diagonally to an axial direction of the rotation shaft 9.

The heat exchangers 50 are provided in the ducts 90A, 90B. The heat exchanger 50 is configured such that more than a plurality of units are arranged, each unit consisting of the fan 51 (see FIG.1) and the heat exchanger tube group are housed in a casing. Each unit may be provided with a filter 52 (see FIG.1) for removing foreign objects such as corrosive substance contained in the ambient air. Further the fan may be circular and the casing may be rectangular.

The heat exchanger 50 cools the coolant using the ambient air. By using the ambient air drawn in via the ducts 90A, 90B attached to the wall surface of the nacelle 4 to cool the coolant in the heat exchanger 50 and to cool the heat generation source in the nacelle 4, the intake ports 91A, 91B can be arranged near the cooling objects and thus the length of the ducts can be reduced. As a result, less power is used for drawing in the ambient air. Further, by providing the ducts 90A, 90B on the side wall of the nacelle 4, a top surface of the nacelle 4 can be used for other purposes such as a heliport.

As shown in FIG.6A, the nacelle 4 may have a curved portion 4A on the side wall on the rear end side. The curved portion 4A curves toward a center line C of the nacelle 4 with distance from the hub 6. More specifically, the ducts 90A, 90B are arranged such as to move toward the center line C of the nacelle 4 with distance from the hub 6 and has a shape sinking into the nacelle 4. Further, the ducts 90A, 90B may be formed such that a cross-sectional area increases from the intake port side toward the exhaust port side at least in a region where the curved portion 4A is formed. As a result, more ambient air can be drawn into the ducts 90A, 90B by diffuser effect of the ducts 90A, 90B. Therefore, the amount of heat taken from the coolant by the ambient air in the heat exchanger increases and thus the heat generation source can be cooled effectively.

Moreover, in the case where a plurality of the units of the heat exchanger 50 is provided in the ducts 90A, 90B, the amount of heat taken from the coolant by the ambient air may be adjusted by changing the rotation speed of the fan 51 or the number of operating fans 51. By changing the rotation speed of the fan 51 or the number of operating fans 51 as described above, the heat exchange rate in the heat exchanger 50 can be adjusted. As a result, the coolant which is reused for cooling the heat generation source can be maintained in an appropriate temperature range so as to cool the heat generation source appropriately.

Further, a vortex generator may be provided on the wall surface of the nacelle 4 near the intake ports 91A, 91B so as to generate a vortex in the ambient air. The vortex generator is formed by protruding portions 101 provided near the intake port as shown in FIG.7. A plurality of the protruding portions 101 are provided along an opening direction of the intake ports 91A, 91B.

It is known that a boundary layer is formed in the ambient air flowing on an object surface such as the wall surface of the nacelle 4. Herein, the boundary layer is a region generated near an object placed in the flow and where the flow speed is slower than a main stream. The pressure increases where the wall surface of the nacelle 4 protrudes on a downstream in the flow, thereby causing boundary layer separation. The boundary layer separation reduces the flow of the ambient air introduced to the intake ports 91A, 91B, hence reducing the heat exchange rate. Therefore, by providing on the wall surface of the nacelle 4 near the intake ports 91A, 91B the vortex generator for generating a vortex in the ambient air, it is possible to prevent boundary layer separation on the wall surface of the nacelle 4 and also to secure the flow of the ambient into the intake ports 91A, 91B.

As shown in FIG.8, a flange 102 projecting from an outer wall surface of the intake port 91A, 91B on the rear end side may be provided. The flange 102 is provided in a height direction of the duct 91A, 91B.

The air flowing outside the outer wall surface of the nacelle 4 flows faster in an area around the flange 102 where the flow passage area decreases, thereby raising its dynamic pressure and correspondingly lowering its static pressure. Further, a vortex is generated in an area downstream of the flange 102. This also contributes to pressure decline in the area. Therefore, the low pressure in the area downstream of the flange 102 draws more ambient air into the ducts 90A, 90B from the intake ports 91A, 91B. As a result, the amount of heat transferring from the coolant to the ambient air in the heat exchanger 50 increases, thereby effectively cooling the heat generation source.

The duct may be formed as shown in FIG.9. Herein FIG.9 is a cross-sectional view of the duct, showing modified examples.

A duct 90-1 shown in FIG.9(A) is configured such that the side wall 96 of the nacelle 4 forming the intake port 91 curves along the flow of the ambient air. More specifically, the side surface 96 on the hub side among the side surfaces forming the intake port 91 curves toward the hub side. As a result, the ambient air can enter the duct 90 easily, thereby improving the heat exchange efficiency in the heat exchanger 50.

A duct 90-2 shown in FIG.9(B) is configured such that a hood 97 disposed parallel to the side wall is provided with a distance from the side wall of the nacelle 4 and the heat exchanger 50 is provided between the side wall of the nacelle 4 and the hood 97. More specifically, a flow path for the ambient air is formed between the side wall of the nacelle 4 and the hood 97. According to this structure, this cooling structure can be easily added to the wind turbine generator 1 with the existing nacelle 4.

A duct 90-3 shown in FIG.9(C-1) is configured such that a hood 98 disposed outside the side wall of the nacelle 4 is provided to form a flow path of he ambient air between the side wall of the nacelle 4 and the hood 98 so that this flow path of the ambient air communicates with another flow path for the ambient air formed by curving the side wall of the nacelle 4. As a result, the ambient air drawn in from the flow path between the side wall of the nacelle 4 and the hood 98 flows through the other flow path formed by curving the side wall of the nacelle 4. The ambient air is then used for cooling the coolant in the heat exchanger 50 and finally discharged.

A duct 90-3' shown in FIG.9(C-2) is configured substantially the same as the duct 90-3 shown in FIG.9(C-1) except that the heat exchanger 50 is arranged on an outer side of the side wall of the nacelle 4. According to the structures of these ducts 90-3, 90-3', the duct can be arranged regardless of locations of the devices within the nacelle 4 and thus shape freedom of the duct is enhanced. As a result, it is possible to provide the duct with a shape and size, which is capable of drawing in sufficient ambient air for cooling.

As described about, in this embodiment, by branching a flow of the operating oil flowing in the oil line 15, particularly in the low pressure oil line 14 and providing the branch line 31 for supplying the lubricating oil to the lubrication object, it is not longer needed to separately provide a line for supplying the lubricating oil and thus the piping structure is simplified. Further, by cooling the operating oil and the lubricating oil to different temperatures by means of the oil line cooler 18 provided on the oil line 15 and the branch line cooler 33 provided on the branch line 14. As a result, each of the operating oil and the lubricating oil can exert appropriate effects.

In addition to the above embodiments, the wind turbine generator 1 may further include the following structure. The following description regards a cooling mechanism for devices other than the hydraulic transmission 10.

In reference to FIG.1, a sealed chamber 35 for housing electrical devices arranged in the nacelle 4 may be provided. The electric devices, herein, refer to control devices, monitors and the like. The sealed chamber 35 is sealed off from the interior space of the nacelle 4. Thus, heat generated from the electric devices is possibly trapped in the sealed chamber 35. A sealed-chamber cooler 36 is provided in the sealed chamber 35. The sealed-chamber cooler is supplied with the coolant supplied from the coolant line 46 and the coolant after cooling the sealed chamber 35 is returned to the heat exchanger 50 through the coolant line 47. The sealed-chamber cooler 36 includes a heat exchanger tube group and a fan so as to cool the air circulated by the fan within the sealed chamber 35 with use of the coolant flowing in a heat exchanger tube.

By housing the electric devices in the sealed chamber 35, the electric devices can be isolated from the ambient air which possibly contains corrosive substance and thus the electric devices are protected against corrosion. As the electric devices are one source of heat generation, housing the electric devices in the sealed chamber 35 may result in heat being trapped in the sealed chamber 35. However, by cooling the air inside the sealed chamber 35, the electric devices are protected against overheating.

For the purpose of ventilating the interior space of the nacelle 4, a nacelle ventilation system may be provided. The nacelle ventilation system includes an intake part 54 provided in the wall surface of the nacelle 4 (a bottom surface of the nacelle in FIG.1), an exhaust part 55 provided in the wall surface of the nacelle 4 (the side wall of the nacelle 4 in FIG.1). The exhaust part 55 includes a fan for exhausting the air in the nacelle 4 to outside of the nacelle 4. The air is circulated in the nacelle 4 using this fan. The intake part 54 includes a filter for removing foreign objects contained in the ambient air, such as a corrosive substance. The ambient air introduced from the intake part 54 is exhausted from the exhaust part 55 while circulating in the interior space of the nacelle 4. As a result, the heat generated from the heat generation source in the nacelle 4 is released to the outside of the nacelle 4.

For the purpose of cooling the generator 16, a generator cooler 56 may be provided. The generator cooler 56 cools the generator 16 by the ambient air introduced from the exterior of the nacelle 4 through a flexible piping 57A. After cooling the generator 16, the ambient air is exhausted from a flexible piping 57B. By connecting the generator cooler 56 to the intake part and the exhaust part formed in the wall surface of the nacelle 4 by means of the flexible pipings 57A, 57B, the flexible pipings 57A, 57B are deformable so as to absorb relative displacement between the generator 16 and the nacelle 4 which is caused by vibration, thermal expansion or the like of the generator 16. As a result, the load on the pipings 57A, 57B is reduced. Moreover, the flexible pipings 57A, 57B have flexibility and are feely bendable to some extent. The flexible pipings 57A, 57B may be made of metal or resin.

For the purpose of cooling an interior space of the hub 6, a hub ventilation system may be provided. The hub ventilation system includes an intake part 60 provided in the hub 6 and an opening 61 functioning as an exhaust part and provided in the blade 7. The intake part 60 includes a fan for drawing in the ambient air and a filter for removing foreign objects contained in the ambient air, such as a corrosive substance. The opening 61 as the exhaust part may be provided in at least one of the blades 7.

During operation of the wind turbine generator 1, rotation of the blades 7 generates negative pressure around the blades 7. In contrast, the interior space of the hub 6 has a positive pressure, which causes a pressure difference between a periphery of the blades 7 and the interior space of the hub 6. In view of this, by communicating the interior space of the hub 6 and the periphery of the blades 7 via the opening 61 formed in the blade 7, the pressure difference generates an air flow from the interior space of the hub 6 through the blade 7 to the outside. Therefore, a fan for ventilating the interior space of the hub 6 is not needed or is reduced in size and thus the power for ventilation can be reduced. Further, for the perspective of increasing the pressure difference, the opening 61 may be formed in a tip part of the blade 7.

As another example of the hub ventilation system, the hub ventilation system may be configured such that an opening part of the intake part 60 communicates with a space 8a between the hub 6 and the spinner 8. In this case, the ambient air is drawn in from the intake part 60 and used for cooling the interior space of the hub 6 and then exhausted through an opening (not shown) formed in the hub 6 to the space 8a between the hub 6 and the spinner 8. The space inside the spinner 8 is not completely sealed and thus the ambient air exhausted to the space 8a gradually leaks to the outside.

As yet another example of the hub ventilation system, the hub ventilation system may be configured such that the opening part of the intake port 60 communicates with an interior space of the nacelle 4 via a hollow space of the rotation shaft 9. The hollow space is formed in the axial direction of the rotation shaft 9 and communicates with the interior space of the hub 6 at one end and communicates with the interior space of the nacelle 4 at the other end. In this case, the ambient air is drawn in from the intake part 60 and used for cooling the interior space of the hub 6 and then exhausted through the hollow space of the rotation shaft 9 to the interior space of the nacelle 4. In such a case that the nacelle 4 is not completely sealed, the ambient air exhausted to the interior space of the nacelle 4 gradually leaks to the outside. In the case where the nacelle 4 is provided with the above nacelle ventilation system, the ambient air exhausted to the interior space of the nacelle 4 is exhausted from the exhaust part 55 of the nacelle ventilation system.

Further, the hub ventilation system may be configured by combining at least two of the above three examples: exhausting the ambient air from the opening 61 of the blade 7; exhausting the ambient air to the space 8a between the hub 6 and the spinner 8; and exhausting the ambient air to the interior space of the nacelle 4. For instance, the ambient air drawn in from the intake part 60 is used for cooling the interior space of the hub 6 and then exhausted to the outside from the opening 61 of the blade 7 and to the interior space of the nacelle 4. Alternatively, the ambient air drawn in from the intake part 60 may be exhausted to the interior space of the nacelle 4 and to the space 8a between the hub 6 and the spinner 8.

For the purpose of cooling a transformer room 64 provided in the interior of the tower 3 or in a peripheral area of the tower 3, a transformer-room cooling system may be provided. In this case, the transformer room 64 is provided in the interior space of the tower 3. The transformer room 64 for housing a transformer 63 may be sealed off from the interior space of the tower 3. In the transformer room 64, a transformer-room cooler 65 is provided. The transformer-room cooler 65 includes a fan for circulating the air in the transformer room 64 and a heat exchanger tube group where the coolant flows. In contrast, the outside of the tower 3, a heat exchanger 66 is provided for cooling the coolant by heat exchange with the ambient air. The heat exchanger 66 may include a filter for removing foreign objects contained in the ambient air, such as a corrosive substance. Then, the coolant cooled by the ambient air in the heat exchanger 66 is introduced to the transformer-room cooler 65 so as to cool the air in the transformer room 64 using the ambient air by means of the transformer-room cooler 65. The coolant used for cooling the air is then returned to the heat exchanger 66.

In the case where the transformer room 64 is provided in the interior of the tower 3 or in the peripheral area of the tower 3, it requires a long piping from the nacelle 4 to the tower 3 to supply the coolant for cooling the hydraulic transmission 10 in the nacelle 4 and also requires a mechanism to correspond with yaw turning of the nacelle 4. Therefore, the piping structure is simplified by supplying coolant from another coolant line provided for the transformer room 64, separately from the coolant line on the nacelle side.

For the purpose of cooling the interior space of the tower 3, a tower-interior ventilation system may be provided. The tower-interior ventilation system includes an intake part 67 provided in the wall surface of the tower 3 and an exhaust part 68 provided in the wall surface of the tower 3. The exhaust part 68 includes a fan for exhausting the air in the interior space of the tower 3 to the outside of the tower 3. The air is circulated in the tower 3 with use of this fan. The intake part 67 includes a filter for removing foreign objects contained in the ambient air, such as a corrosive substance. The ambient air introduced from the intake part 67 is exhausted from the exhaust part 68 while circulating in the interior space of the tower 3. As a result, the heat generated from the heat generation source in the tower 3 is released to the outside of the tower 3.

While the embodiments of the present invention have been described, it is obvious to those skilled in the art that various changes may be made without departing from the scope of the invention.

In the present embodiments, the pump bearing 74 of the hydraulic pump 11 and the cam housing 77 are described as examples of the lubrication object. However, the lubrication object is not limited to these and may be other slide parts of the hydraulic pump 11, or other slide parts of the hydraulic motor 12 such as a cram shaft bearing and a cam housing.

### [Reference Signs list]

1 WIND TURBINE GENERATOR
2 BASE
3 TOWER
4 NACELLE
5 ROTOR
6 HUB
7 BLADE
8 SPINNER
9 ROTATION SHAFT
10 HYDRAULIC TRANSMISSION
11 HYDRAULIC PUMP
12 HYDRAULIC MOTOR
13 HIGH PRESSURE OIL LINE
14 LOW PRESSURE OIL LINE
15 OIL LINE
16 GENERATOR
18 OIL LINE COOLER
19 FLOW REGULATING VALVE
31 BRANCH LINE
35 SEALED CHAMBER
36 SEALED-CHAMBER COOLER
41, 42, 44, 45, 46, 47 COOLANT LINE
50 HEAT EXCHANGER
51 FAN
52 FILTER
54 INTAKE PART
55 EXHAUST PART
60 INTAKE PART
61 OPENING
63 TRANSFORMER
64 TRANSFORMER ROOM
65 TRANSFORMER-ROOM COOLER
66 HEART EXCHANGER

## Claims

1. A power generating apparatus of renewable energy type for generating power from renewable energy, the apparatus comprising:
a blade (7);
a hub (6) supporting the blade (7);
a rotation shaft (9) configured to be rotated by the renewable energy inputted via the blade (7);
a nacelle (4) housing the rotation shaft (9);
a hydraulic pump (11) configured to be driven by the rotation shaft (9) to pressurize operating oil in a working chamber and discharge the pressurized operating oil;
a hydraulic motor (12) configured to be driven by the operating oil discharged from the hydraulic pump (11);
a generator (16) connected to the hydraulic motor (12);
an oil line (15) for returning the operating oil from the hydraulic motor to the working chamber of the hydraulic pump (11);
an oil line cooler (18) provided in the oil line (15) for cooling the operating oil flowing in the oil line (15) by heat exchange with a coolant;
a coolant line for supplying the coolant to the oil line cooler (18);
**characterized in that** the apparatus further comprises
a branch line (31) branching from the oil line (15) for introducing the operating oil to a lubrication object of at least one of the hydraulic pump (11) or the hydraulic motor (12); and
a branch line cooler (33) provided in the branch line (31) for cooling the operating oil flowing in the branch line (31) by heat exchange with a coolant,
wherein two flows of the operating oil cooled by the oil line cooler (18) and the branch line cooler (33) to different temperatures are supplied to the working chamber and the lubrication object via the oil line (15) and the branch line (31), respectively.

2. The power generating apparatus of renewable energy type according to claim 1,
wherein the branch line cooler (33) is configured to cool the operating oil flowing in the branch line (31) to a temperature not higher than a temperature of the operating oil cooled by the oil line cooler (18).

3. The power generating apparatus of renewable energy type according to claim 1, further comprising:
a bypass line (17) branching from at least one of the oil line (15) or the coolant line and merging into at least one of the oil line (15) or the coolant line so as to bypass the oil line cooler (18); and
a flow regulating valve (19) provided in at least one of the oil line (15) or the coolant line for bypassing the oil line cooler (18) between a branching point and a merging point of the bypass line (17), the flow regulating valve (19) regulating a flow rate of at least one of the operating oil or the coolant that enters the oil line cooler (18).

4. The power generating apparatus of renewable energy type according to claim 1, further comprising:
a heat exchanger (50) provided in the coolant line for cooling the coolant by heat exchange with a surrounding fluid that is present around the power generating apparatus of renewable energy type,
wherein a heat exchange rate between the coolant and the surrounding fluid in the heat exchanger (50) is adjustable by adjusting at least one of a flow rate of the coolant or a flow rate of the surrounding fluid.

5. The power generating apparatus of renewable energy type according to claim 4, further comprising:
a duct (90) attached to a wall surface of the nacelle (4) and having the heat exchanger (50) inside,
wherein the surrounding fluid includes ambient air, and
wherein the heat exchanger (50) is configured to cool the coolant by use of the ambient air and to cool the operating oil and a heat generation source in the nacelle (4) by use of the coolant.

6. The power generating apparatus of renewable energy type according to claim 4, further comprising:
a duct (90) attached to a wall surface of the nacelle (4) and having the heat exchanger (50) inside,
wherein the duct (90) comprises an intake port (91) for introducing ambient air as the surrounding fluid into the duct (90) and an exhaust port (92) for exhausting the ambient air, the intake port (91) being provided on a side wall of the nacelle (4) along the rotation shaft (9), the exhaust port (92) being provided on a wall surface of the nacelle (4) on a rear end side that is farther from the hub (6).

7. The power generating apparatus of renewable energy type according to claim 6, further comprising:
a vortex generator provided on the wall surface of the nacelle near the intake port (91) for generating a vortex in the ambient air.

8. The power generating apparatus of renewable energy type according to claim 6,
wherein the duct (90) further comprises a flange (102) projecting from an outer wall surface of the intake port (91) on the rear end side.

9. The power generating apparatus of renewable energy type according to claim 6,
wherein the nacelle (4) has a curved portion (4A) on the side wall on the rear end side, the curved portion (4A) curving toward a center line of the nacelle (4) with distance from the hub (6), and
wherein the duct (90) is formed such that a cross-sectional area increases from an intake port side toward an exhaust port side at least in a region where the curved portion (4A) is formed.

10. The power generating apparatus of renewable energy type according to claim 6,
wherein a plurality of the heat exchangers (50) is arranged in the duct (90),
wherein the duct (90) further comprises a fan (51) for increasing an amount of the ambient air introduced into the duct (90), and
wherein an amount of heat taken from the coolant by the ambient air in the heat exchanger is adjustable by changing a rotational speed of the fan.

11. The power generating apparatus of renewable energy type according to claim 6,
wherein a plurality of the heat exchangers (50) is arranged in the duct (90),
wherein the duct (90) further comprises a plurality of fans (51) for increasing an amount of the ambient air introduced into the duct, and
wherein an amount of heat taken from the coolant by the ambient air in the heat exchanger (50) is adjustable by changing a number of operating fans among the plurality of the fans.

12. The power generating apparatus of renewable energy type according to claim 1, further comprising:
a sealed chamber (35) housing an electrical device arranged in an interior space of the nacelle (4), the sealed chamber (35) being sealed off from the interior space,
wherein the sealed chamber (35) is configured to be cooled by the coolant cooled by the heat exchanger (50).

13. The power generating apparatus of renewable energy type according to claim 1, further comprising:
a generator cooler (56) for cooling the generator (16),
wherein the generator cooler (56) is configured to cool the generator (16) by ambient air introduced from an exterior of the nacelle (4) through a flexible piping.

14. The power generating apparatus of renewable energy type according to claim 1, further comprising:
a transformer room (64) provided in an interior or a peripheral area of a tower (3) supporting the nacelle (4) for housing a transformer (63);
another cooler for cooling air in the transformer room (64) by heat exchange with another coolant;
another coolant line provided separately from the coolant line, the another coolant flowing in the another coolant line; and
another heat exchanger (66) connected to the another coolant line for cooling the another coolant by heat exchange with surrounding fluid around the power generating apparatus of renewable energy type.

15. The power generating apparatus of renewable energy type according to claim 1, further comprising:
a ventilation system for cooling a space inside at least one of a tower (3) supporting the nacelle (4), the nacelle (4) or the hub (6) by use of ambient air,
wherein the ventilation system comprises an intake port for introducing the ambient using a fan, a filter provided in the intake port for blocking a corrosive substance contained in the ambient air, and an exhaust port for exhausting air from the space.

16. The power generating apparatus of renewable energy type according to claim 15,
wherein the ventilation system further comprises a shutter for opening and closing the intake port, and
wherein the shutter is configured to open when a temperature in the space is above a setting temperature and to close when the temperature in the space is below the setting temperature.

17. The power generating apparatus of renewable energy type according to claim 15,
wherein the ventilation system is provided in the hub (6),
wherein the intake port communicates with a hole formed in the blade so as to exhaust the ambient air from the hole.

18. The power generating apparatus of renewable energy type according to claim 15,
wherein the ventilation system is provided in the hub,
wherein the intake port is configured such that an opening formed in the hub communicates with one of a space between the hub and a spinner covering the hub, or an interior space of the nacelle through a hollow space of the rotation shaft so as to exhaust the ambient air introduced from the intake port to the at least one of the space between the hub and the spinner or the interior space of the nacelle.

## Patentansprüche

1. Vorrichtung zur Erzeugung von Energie vom Typ erneuerbare Energie zum Erzeugen von Energie aus erneuerbarer Energie, umfassend:
ein Rotorblatt (7),
eine Nabe (6), die das Rotorblatt (7) trägt,
eine Drehwelle (9), die dazu ausgebildet ist, durch die eingebrachte erneuerbare Energie über das Rotorblatt (7) gedreht zu werden,
eine Gondel (4), die die Drehwelle (9) aufnimmt,
eine Hydraulikpumpe (11), die dazu ausgebildet ist, durch die Drehwelle (9) angetrieben zu werden, um Betriebsöl in einer Arbeitskammer unter Druck zu setzen und das unter Druck gesetzte Betriebsöl abzuführen,
einen Hydraulikmotor (12), der dazu ausgebildet ist, durch das von der Hydraulikpumpe (11) abgeführte Drucköl angetrieben zu werden,
einen Generator (16), der mit dem Hydraulikmotor (12) verbunden ist,
eine Ölleitung (15) zum Rückführen des Betriebsöls von dem Hydraulikmotor zu der Arbeitskammer der Hydraulikpumpe (11),
einen Ölleitungskühler (18), der in der Ölleitung (15) vorgesehen ist, zum Kühlen des in der Ölleitung (15) strömenden Betriebsöls durch Wärmeaustausch mit einem Kühlmittel,
eine Kühlmittelleitung zum Zuführen des Kühlmittels zu dem Ölleitungskühler (18),
**dadurch gekennzeichnet, dass** die Vorrichtung ferner umfasst:
eine Abzweigleitung (31), welche von der Ölleitung (15) abzweigt, zum Einleiten des Betriebsöls zu einem Schmiergegenstand von mindestens einem aus der Gruppe umfassend die Hydraulikpumpe (11) und den Hydraulikmotor (12), und
einen Abzweigleitungskühler (33), der in der Abzweigleitung (31) vorgesehen ist, zum Kühlen des Betriebsöls, das in der Abzweigleitung (31) strömt, durch Wärmeaustausch mit einem Kühlmittel,
wobei zwei Ströme des durch den Ölleitungskühler (18) und den Abzweigleitungskühler (33) auf verschiedene Temperaturen gekühlten Betriebsöls der Arbeitskammer und dem Schmiergegenstand über die Ölleitung (15) bzw. die Abzweigleitung (31) zugeführt werden.

2. Vorrichtung zur Erzeugung von Energie vom Typ erneuerbare Energie nach Anspruch 1,
wobei der Abzweigleitungskühler (33) dazu ausgebildet ist, das Betriebsöl, welches in der Abzweigleitung (31) strömt, auf eine Temperatur zu kühlen, die nicht höher als eine Temperatur des durch den Ölleitungskühler (18) gekühlten Betriebsöls ist.

3. Vorrichtung zur Erzeugung von Energie vom Typ erneuerbare Energie nach Anspruch 1, ferner umfassend:
eine Umgehungsleitung (17), die von mindestens einer aus der Gruppe umfassend die Ölleitung (15) und die Kühlmittelleitung abzweigt und in mindestens eine aus der Gruppe umfassend die Ölleitung (15) und die Kühlmittelleitung einmündet, um den Ölleitungskühler (18) zu umgehen, und
ein Strömungsregelventil (19), das in mindestens einer aus der Gruppe umfassend die Ölleitung (15) und die Kühlmittelleitung vorgesehen ist, zum Umgehen des Ölleitungskühlers (18) zwischen einem Abzweigpunkt und einem Einmündungspunkt der Umgehungsleitung (17), wobei das Strömungsregelventil (19) eine Strömungsgeschwindigkeit von mindestens einem aus der Gruppe umfassend das Betriebsöl und das Kühlmittel, welches in den Ölleitungskühler (18) eintritt, regelt.

4. Vorrichtung zur Erzeugung von Energie vom Typ erneuerbare Energie nach Anspruch 1, ferner umfassend:
einen Wärmetauscher (50), der in der Kühlmittelleitung vorgesehen ist, zum Kühlen des Kühlmittels durch Wärmeaustausch mit einem umgebenden Fluid, welches rund um die Vorrichtung zur Erzeugung von Energie vom Typ erneuerbare Energie vorhanden ist,
wobei eine Wärmeaustauschrate zwischen dem Kühlmittel und dem umgebenden Fluid in dem Wärmetauscher (50) durch Einstellen von mindestens einem aus der Gruppe umfassend eine Strömungsgeschwindigkeit des Kühlmittels und eine Strömungsgeschwindigkeit des umgebenden Fluids einstellbar ist.

5. Vorrichtung zur Erzeugung von Energie vom Typ erneuerbare Energie nach Anspruch 4, ferner umfassend:
einen Kanal (90), der an einer Wandoberfläche der Gondel (4) befestigt ist und darin den Wärmetauscher (50) aufweist,
wobei das umgebende Fluid Umgebungsluft umfasst, und
wobei der Wärmetauscher (50) dazu ausgebildet ist, das Kühlmittel durch Verwendung der Umgebungsluft zu kühlen und das Betriebsöl und eine Wärmeerzeugungsquelle in der Gondel (4) durch Verwendung des Kühlmittels zu kühlen.

6. Vorrichtung zur Erzeugung von Energie vom Typ erneuerbare Energie nach Anspruch 4, ferner umfassend:
einen Kanal (90), der an einer Wandoberfläche der Gondel (4) befestigt ist und darin den Wärmetauscher (50) aufweist,
wobei der Kanal (90) eine Einlassöffnung (91) zum Einleiten von Umgebungsluft als umgebendes Fluid in den Kanal (90) und eine Auslassöffnung (92) zum Abführen der Umgebungsluft umfasst, wobei die Einlassöffnung (91) an einer Seitenwand der Gondel (4) entlang der Drehwelle (9) vorgesehen ist, wobei die Auslassöffnung (92) an einer Wandoberfläche der Gondel (4) an einer Hinterendseite, die weiter von der Nabe (6) entfernt ist, vorgesehen ist.

7. Vorrichtung zur Erzeugung von Energie vom Typ erneuerbare Energie nach Anspruch 6, ferner umfassend:
einen Wirbelgenerator, der an der Wandoberfläche der Gondel in der Nähe der Einlassöffnung (91) vorgesehen ist, zum Erzeugen eines Wirbels in der Umgebungsluft.

8. Vorrichtung zur Erzeugung von Energie vom Typ erneuerbare Energie nach Anspruch 6,
wobei der Kanal (90) ferner einen Flansch (102) umfasst, der von einer Außenwandoberfläche der Einlassöffnung (91) an der Hinterendseite vorsteht.

9. Vorrichtung zur Erzeugung von Energie vom Typ erneuerbare Energie nach Anspruch 6,
wobei die Gondel (4) einen gekrümmten Abschnitt (4A) an der Seitenwand an der Hinterendseite aufweist, wobei der gekrümmte Abschnitt (4A) in Richtung einer Mittellinie der Gondel (4) mit Abstand von der Nabe (6) gekrümmt ist, und
wobei der Kanal (90) derart ausgebildet ist, dass eine Querschnittsfläche von einer Einlassöffnungsseite in Richtung einer Auslassöffnungsseite mindestens in einem Bereich, wo der gekrümmte Abschnitt (4A) ausgebildet ist, zunimmt.

10. Vorrichtung zur Erzeugung von Energie vom Typ erneuerbare Energie nach Anspruch 6,
wobei mehrere der Wärmetauscher (50) in dem Kanal (90) angeordnet sind,
wobei der Kanal (90) ferner einen Ventilator (51) zum Erhöhen einer Menge der in den Kanal (90) eingeleiteten Umgebungsluft umfasst, und
wobei eine Wärmemenge, die durch die Umgebungsluft in dem Wärmetauscher dem Kühlmittel entzogen wird, durch Ändern der Drehzahl des Ventilators einstellbar ist.

11. Vorrichtung zur Erzeugung von Energie vom Typ erneuerbare Energie nach Anspruch 6,
wobei mehrere der Wärmetauscher (50) in dem Kanal (90) angeordnet sind,
wobei der Kanal (90) ferner mehrere Ventilatoren (51) zum Erhöhen einer Menge der in den Kanal eingeführten Umgebungsluft umfasst, und
wobei eine Wärmemenge, die durch die Umgebungsluft in dem Wärmetauscher (50) dem Kühlmittel entzogen wird, durch Ändern einer Anzahl in Betrieb befindlicher Ventilatoren der mehreren Ventilatoren einstellbar ist.

12. Vorrichtung zur Erzeugung von Energie vom Typ erneuerbare Energie nach Anspruch 1, ferner umfassend:
eine abgeschlossene Kammer (35), die eine elektrische Vorrichtung aufnimmt, welche in einem Innenraum der Gondel (4) angeordnet ist, wobei die abgeschlossene Kammer (35) gegenüber dem Innenraum abgeschlossen ist,
wobei die abgeschlossene Kammer (35) dazu ausgebildet ist, durch das Kühlmittel, welches durch den Wärmetauscher (50) gekühlt wird, gekühlt zu werden.

13. Vorrichtung zur Erzeugung von Energie vom Typ erneuerbare Energie nach Anspruch 1, ferner umfassend:
einen Generatorkühler (56) zum Kühlen des Generators (16),
wobei der Generatorkühler (56) dazu ausgebildet ist, den Generator (16) durch Umgebungsluft, die von einem Äußeren der Gondel (4) durch eine flexible Rohrleitung eingeleitet wird, zu kühlen.

14. Vorrichtung zur Erzeugung von Energie vom Typ erneuerbare Energie nach Anspruch 1, ferner umfassend:
einen Transformatorraum (64), der in einem Inneren oder einem peripheren Bereich eines Turms (3), welcher die Gondel (4) trägt, zum Aufnehmen eines Transformators (63) vorgesehen ist,
einen anderen Kühler zum Kühlen von Luft in dem Transformatorraum (64) durch Wärmeaustausch mit einem anderen Kühlmittel,
eine andere Kühlmittelleitung, die getrennt von der Kühlmittelleitung vorgesehen ist, wobei das andere Kühlmittel in der anderen Kühlmittelleitung strömt, und
einen anderen Wärmetauscher (66), der mit der anderen Kühlmittelleitung verbunden ist, zum Kühlen des anderen Kühlmittels durch Wärmeaustausch mit die Vorrichtung zur Erzeugung von Energie vom Typ erneuerbare Energie umgebendem Fluid.

15. Vorrichtung zur Erzeugung von Energie vom Typ erneuerbare Energie nach Anspruch 1, ferner umfassend:
ein Ventilationssystem zum Kühlen eines Raums innerhalb mindestens eines aus der Gruppe umfassend einen Turm (3), der die Gondel (4) trägt, die Gondel (4) und die Nabe (6) durch Verwendung von Umgebungsluft,
wobei das Ventilationssystem eine Einlassöffnung zum Einleiten der Umgebungsluft mittels eines Ventilators, einen Filter, der in der Einlassöffnung vorgesehen ist, zum Blockieren einer korrodierenden Substanz, die in der Umgebungsluft enthalten ist, und eine Auslassöffnung zum Abführen von Luft aus dem Raum umfasst.

16. Vorrichtung zur Erzeugung von Energie vom Typ erneuerbare Energie nach Anspruch 15,
wobei das Ventilationssystem ferner einen Verschluss zum Öffnen und Schließen der Einlassöffnung umfasst, und
wobei der Verschluss dazu ausgebildet ist, sich zu öffnen, wenn eine Temperatur in dem Raum über einer Einstelltemperatur ist, und sich zu schließen, wenn die Temperatur in dem Raum unter der Einstelltemperatur ist.

17. Vorrichtung zur Erzeugung von Energie vom Typ erneuerbare Energie nach Anspruch 15,
wobei das Ventilationssystem in der Nabe (6) vorgesehen ist,
wobei die Einlassöffnung mit einem Loch, das in dem Rotorblatt ausgebildet ist, kommuniziert, um die Umgebungsluft von dem Loch abzuführen.

18. Vorrichtung zur Erzeugung von Energie vom Typ erneuerbare Energie nach Anspruch 15,
wobei das Ventilationssystem in der Nabe vorgesehen ist,
wobei die Einlassöffnung derart ausgebildet ist, dass eine Öffnung, die in der Nabe ausgebildet ist, mit einem aus der Gruppe umfassend einen Raum zwischen der Nabe und einer die Nabe abdeckenden Haube und einen Innenraum der Gondel durch einen Hohlraum der Drehwelle kommuniziert, um die Umgebungsluft, die von der Einlassöffnung zu dem mindestens einen aus der Gruppe umfassend den Raum zwischen der Nabe und der Haube und den Innenraum der Gondel eingeleitet wird, abzuführen.

## Revendications

1. Appareil de génération d'énergie du type à énergie renouvelable destiné à générer de l'énergie à partir d'une énergie renouvelable, l'appareil comportant
une pale (7) ;
un moyeu (6) supportant la pale (7) ;
un arbre de rotation (9) configuré pour être entraîné en rotation par l'énergie renouvelable entrée par l'intermédiaire de la pale (7) ;
une nacelle (4) logeant l'arbre de rotation (9) ; une pompe hydraulique (11) configurée pour être entraînée par l'arbre de rotation (9) afin de mettre en pression de l'huile de fonctionnement dans une chambre de travail et de refouler l'huile de fonctionnement sous pression ;
un moteur hydraulique (12) configuré pour être entraîné par l'huile de fonctionnement refoulée de la pompe hydraulique (11) ;
une génératrice (16) reliée au moteur hydraulique (12) ;
une conduite d'huile (15) destinée à renvoyer l'huile de fonctionnement du moteur hydraulique à la chambre de travail de la pompe hydraulique (11) ;
un dispositif de refroidissement de conduite d'huile (18) prévu dans la conduite d'huile (15) pour refroidir l'huile de fonctionnement qui s'écoule dans la conduite d'huile (15) par échange de chaleur avec un agent de refroidissement ;
une conduite d'agent de refroidissement destinée à délivrer l'agent de refroidissement au dispositif de refroidissement de conduite d'huile (18) ;
**caractérisé en ce que** l'appareil comporte en outre
une conduite d'embranchement (31) partant de la conduite d'huile (15) pour introduire l'huile de fonctionnement dans un objet de lubrification de au moins un de la pompe hydraulique (11) ou du moteur hydraulique (12) ; et
un dispositif de refroidissement de conduite d'embranchement (33) prévu dans la conduite d'embranchement (31) pour refroidir l'huile de fonctionnement s'écoulant dans la conduite d'embranchement (31) par échange de chaleur avec un agent de refroidissement,
dans lequel deux écoulements de l'huile de fonctionnement refroidie par le dispositif de refroidissement de conduite d'huile (18) et le dispositif de refroidissement de conduite d'embranchement (33) à des températures différentes sont délivrés à la chambre de travail et à l'objet de lubrification par l'intermédiaire de la conduite d'huile (15) et de la conduite d'embranchement (31), respectivement.

2. Appareil de génération d'énergie du type à énergie renouvelable selon la revendication 1,
dans lequel le dispositif de refroidissement de conduite d'embranchement (33) est configuré pour refroidir l'huile de fonctionnement s'écoulant dans la conduite d'embranchement (31) à une température pas plus élevée qu'une température de l'huile de fonctionnement refroidie par le dispositif de refroidissement de conduite d'huile (18).

3. Appareil de génération d'énergie du type à énergie renouvelable selon la revendication 1, comportant en outre :
une conduite de dérivation (17) partant de au moins une de la conduite d'huile (15) ou de la conduite d'agent de refroidissement et se raccordant à au moins une de la conduite d'huile (15) ou de la conduite d'agent de refroidissement de façon à contourner le dispositif de refroidissement de conduite d'huile (18) ; et
une soupape de régulation d'écoulement (19) prévue dans au moins une de la conduite d'huile (15) ou de la conduite d'agent de refroidissement afin de contourner le dispositif de refroidissement de conduite d'huile (18) entre un point de départ et un point de raccordement de la conduite de dérivation (17), la soupape de régulation d'écoulement (19) régulant un débit de au moins un de l'huile de fonctionnement ou de l'agent de refroidissement qui entre dans le dispositif de refroidissement de conduite d'huile (18).

4. Appareil de génération d'énergie du type à énergie renouvelable selon la revendication 1, comportant en outre :
un échangeur de chaleur (50) prévu dans la conduite d'agent de refroidissement pour refroidir l'agent de refroidissement par échange de chaleur avec un fluide environnant qui est présent autour de l'appareil de génération d'énergie du type à énergie renouvelable,
dans lequel un taux d'échange de chaleur entre l'agent de refroidissement et le fluide environnant dans l'échangeur de chaleur (50) est réglable en ajustant au moins un d'un débit de l'agent de refroidissement ou d'un débit du fluide environnant.

5. Appareil de génération d'énergie du type à énergie renouvelable selon la revendication 4, comportant en outre :
un conduit (90) fixé sur une surface de paroi de la nacelle (4) et ayant l'échangeur de chaleur (50) à l'intérieur,
dans lequel le fluide environnant comprend de l'air ambiant, et
dans lequel l'échangeur de chaleur (50) est configuré pour refroidir l'agent de refroidissement grâce à l'utilisation de l'air ambiant et pour refroidir l'huile de fonctionnement et une source de génération de chaleur dans la nacelle (4) grâce à l'utilisation de l'agent de refroidissement.

6. Appareil de génération d'énergie du type à énergie renouvelable selon la revendication 4, comportant en outre :
un conduit (90) fixé sur une surface de paroi de la nacelle (4) et ayant l'échangeur de chaleur (50) à l'intérieur,
dans lequel le conduit (90) comporte un orifice d'admission (91) destiné à introduire de l'air ambiant comme fluide environnant dans le conduit (90) et un orifice d'échappement (92) pour l'échappement de l'air ambiant, l'orifice d'admission (91) étant prévu sur une paroi latérale de la nacelle (4) le long de l'arbre de rotation (9), l'orifice d'échappement (92) étant prévu sur une surface de paroi de la nacelle (4) sur un côté d'extrémité arrière qui est plus loin du moyeu (6).

7. Appareil de génération d'énergie du type à énergie renouvelable selon la revendication 6, comportant en outre :
un générateur de tourbillon prévu sur la surface de paroi de la nacelle près de l'orifice d'admission (91) afin de générer un tourbillon dans l'air ambiant.

8. Appareil de génération d'énergie du type à énergie renouvelable selon la revendication 6,
dans lequel le conduit (90) comporte en outre une bride (102) qui dépasse d'une surface de paroi extérieure de l'orifice d'admission (91) sur le côté d'extrémité arrière.

9. Appareil de génération d'énergie du type à énergie renouvelable selon la revendication 6,
dans lequel la nacelle (4) a une partie courbe (4A) sur la paroi latérale sur le côté d'extrémité arrière, la partie courbe (4A) se courbant vers une conduite centrale de la nacelle (4) avec une distance par rapport au moyeu (6), et
dans lequel le conduit (90) est formé de telle sorte qu'une section transversale augmente depuis un côté d'orifice d'admission vers un côté d'orifice d'échappement au moins dans une zone où la partie courbe (4A) est formée.

10. Appareil de génération d'énergie du type à énergie renouvelable selon la revendication 6,
dans lequel une pluralité d'échangeurs de chaleur (50) est disposée dans le conduit (90),
dans lequel le conduit (90) comporte en outre un ventilateur (51) destiné à augmenter une quantité de l'air ambiant introduit dans le conduit (90), et
dans lequel une quantité de chaleur prélevée dans l'agent de refroidissement par l'air ambiant dans l'échangeur de chaleur est réglable en changeant une vitesse de rotation du ventilateur.

11. Appareil de génération d'énergie du type à énergie renouvelable selon la revendication 6,
dans lequel une pluralité d'échangeurs de chaleur (50) est disposée dans le conduit (90),
dans lequel le conduit (90) comporte en outre une pluralité de ventilateurs (51) afin d'augmenter une quantité de l'air ambiant introduit dans le conduit, et
dans lequel une quantité de chaleur prélevée dans l'agent de refroidissement par l'air ambiant dans l'échangeur de chaleur (50) est réglable en changeant un nombre de ventilateurs en fonctionnement parmi la pluralité de ventilateurs.

12. Appareil de génération d'énergie du type à énergie renouvelable selon la revendication 1, comportant en outre :
une chambre étanche (35) renfermant un dispositif électrique disposé dans un espace intérieur de la nacelle (4), la chambre étanche (35) étant isolée de l'espace intérieur,
dans lequel la chambre étanche (35) est configurée pour être refroidie par l'agent de refroidissement refroidi par l'échangeur de chaleur (50).

13. Appareil de génération d'énergie du type à énergie renouvelable selon la revendication 1, comportant en outre :
un dispositif de refroidissement de génératrice (56) destiné à refroidir la génératrice (16),
dans lequel le dispositif de refroidissement de génératrice (56) est configuré pour refroidir la génératrice (16) grâce à de l'air ambiant introduit de l'extérieur de la nacelle (4) par l'intermédiaire d'une tuyauterie flexible.

14. Appareil de génération d'énergie du type à énergie renouvelable selon la revendication 1, comportant en outre :
un compartiment de transformateur (64) prévu dans une zone intérieure ou périphérique d'un mât (3) supportant la nacelle (4) pour renfermer un transformateur (63) ;
un autre dispositif de refroidissement destiné à refroidir de l'air dans le compartiment de transformateur (64) par échange de chaleur avec un autre agent de refroidissement ;
une autre conduite d'agent de refroidissement prévue séparément de la conduite d'agent de refroidissement, l'autre agent de refroidissement s'écoulant dans l'autre conduite d'agent de refroidissement ; et
un autre échangeur de chaleur (66) relié à l'autre conduite d'agent de refroidissement pour refroidir l'autre agent de refroidissement par échange de chaleur avec un fluide environnant autour de l'appareil de génération d'énergie du type à énergie renouvelable.

15. Appareil de génération d'énergie du type à énergie renouvelable selon la revendication 1, comportant en outre :
un système de ventilation destiné à refroidir un espace à l'intérieur de au moins un d'un mât (3) supportant la nacelle (4), de la nacelle (4) ou du moyeu (6) en utilisant de l'air ambiant,
dans lequel le système de ventilation comporte un orifice d'admission pour introduire l'air ambiant en utilisant un ventilateur, un filtre prévu dans l'orifice d'admission pour bloquer une substance corrosive contenue dans l'air ambiant, et un orifice d'échappement pour l'échappement de l'air de l'espace.

16. Appareil de génération d'énergie du type à énergie renouvelable selon la revendication 15,
dans lequel le système de ventilation comporte en outre un volet pour ouvrir et fermer l'orifice d'admission, et
dans lequel le volet est configuré pour s'ouvrir quand une température dans l'espace est au-dessus d'une température de consigne et pour se fermer quand la température dans l'espace est en-dessous de la température de consigne.

17. Appareil de génération d'énergie du type à énergie renouvelable selon la revendication 15,
dans lequel le système de ventilation est prévu dans le moyeu (6),
dans lequel l'orifice d'admission communique avec un trou formé dans la pale de façon à laisser l'air ambiant s'échapper par le trou.

18. Appareil de génération d'énergie du type à énergie renouvelable selon la revendication 15,
dans lequel le système de ventilation est prévu dans le moyeu,
dans lequel l'orifice d'admission est configuré de telle sorte qu'une ouverture formée dans le moyeu communique avec l'un d'un espace entre le moyeu et une casserole recouvrant le moyeu ou d'un espace intérieur de la nacelle par l'intermédiaire d'un espace creux de l'arbre de rotation de façon à laisser l'air ambiant introduit par l'orifice d'admission s'échapper vers au moins un de l'espace entre le moyeu et la casserole ou de l'espace intérieur de la nacelle.
